# EUROPEAN PATENT APPLICATION

(11) **EP 1 249 767 A2**
(43) Date of publication of application: **16.10.2002**
(21) Application number: 02252605.7
(22) Date of filing: 12.04.2002
(51) Int. Cl.: G06F 17/30

(54) **System and method for updating an intranet portal**

(30) Priority: 12.04.2001 US 833432
(71) Applicant: GENERAL ELECTRIC COMPANY, Schenectady, NY 12345 (US)
(72) Inventor: Shumaker, Lance Christopher, Loveland, Ohio 45140 (US); Meyer, Kristin Sherwin, Cincinnati, Ohio 45255 (US); Darpel, David M., Crescent Springs, Kentucky 41017 (US)
(74) Representative: Goode, Ian Roy

(57) **Abstract**

Users of an Intranet portal can propose new modules to be added to the Intranet portal. To propose a new module a user has to provide a name (102) and description (104) of the new module. After providing the name (102) and description (104) of the new module, the user can then add the new module to a list (108) of proposed new modules (112). Other users of the Intranet portal can then review the list (108) of proposed new modules (112). In reviewing the proposed modules (112) the other users can obtain the description (104) of the module provided by the user who suggested the module. If the other user likes the proposed new module (112), the other user can vote (114) for the proposed new module (112). The total number of votes (116) for each proposed new module (112) is maintained and then used to determine which modules (112) should be added to the Intranet portal.

## Description

The present invention relates generally to the updating of an Intranet portal. More specifically, the present invention relates to the adding of new modules to an Intranet portal that have been proposed and reviewed by the users of the Intranet portal.

Many corporations and organization have Intranets that employees of the corporation or organization can use to access information that may assist the employee in performing his duties. These Intranets typically include web pages written in HTML and Java that have a common design or layout ("look and feel") and are viewed using a web browser. Large-scale Intranets may have over 500,000 static web pages of information available for employees. The files and web pages of the corporate and organizational Intranets are often structured in a manner that is very similar to the structure of the Internet, i.e. the files and web pages are stored at many different locations with no common organizational scheme. Frequently, these Intranets can also be used as a gateway to the Internet to provide employees access to additional information on the Internet.

The most common mechanism for an employee or user to gain access to the data, applications, information and processes on the corporate or organizational Intranet is for the employee or user to use an Intranet portal. The most basic type of Intranet portal is one that provides the user with access to the Intranet, but does not provide many additional functions. The basic Intranet portal typically accesses a home page for the user. The Intranet portal may include some links or other information for the user on the home page. However, the user is generally not given any further assistance in locating and accessing the data, applications, information and processes on the Intranet. To locate and access this other data, applications, information and processes on the Intranet, a user typically has to select an appropriate link, if one is available, to the data, applications, information and processes or manually type into the user's web browser the corresponding address of the data, applications, information and processes on the Intranet. This type of Intranet portal is not particularly useful for the user because it can be very difficult and time-consuming for the user to locate and acquire the data, applications, information and processes on the Intranet.

To overcome some of the problems of the basic type of intranet portal, more advanced Intranet portals have been used to assist the user in quickly and efficiently locating the desired data, applications, information and processes on the Intranet. One type of advanced Intranet portal is an Intranet portal that uses modules or components. The modules or components of the advanced Intranet portal are small pieces of functionality or applications, which provide the user with entry and access to certain data, applications, information and processes on the Intranet without the user having to take separate action such as, entering an address into a web browser or selecting an appropriate link.

However, it can be difficult for the administrators of the advanced Intranet portal to add the appropriate modules to continually meet the needs of the users. One process for the administrators to add modules to the advanced Intranet portal is to use their own judgment to make a determination of the modules that they think are needed by the users. This process has the obvious drawback that the users of the modules have no input regarding the modules that are added. Another process for the administrators to add modules to an Intranet portal is to accept suggestions from users. This process also has drawbacks because the administrators do not know if a majority of users will benefit from the addition of the suggested module to the Intranet portal. The administrators may spend time developing a module that benefits only the user who suggested the module, or only a handful of users, at the expense of developing a module that may benefit many users. Still another process for administrators to add modules to an Intranet is to present the users with a complex and detailed survey to gather feedback from the employees and users on possible modules. This process has the drawback that employees with ideas for new modules may not suggest the modules because the survey is to complicated and time consuming to complete.

Therefore, what is needed is a simple and efficient process for adding the modules most needed by the users of the Intranet portal.

The present invention is directed to a process for determining a module to be added to an Intranet portal. The process includes proposing a module to be added to the Intranet portal and adding the proposed module to a list of suggested modules. Next, the list of suggested modules is displayed to a user of the Intranet portal. Users of the Intranet portal can select a module from the list of suggested modules and indicate their support or need for the selected module. The indication of support for the selected module is included in a cumulative indication of support for the selected module. Finally, the module to be added to the Intranet portal is determined from the list of suggested modules using the cumulative indication of support for each suggested module in the list of suggested modules.

Another embodiment of the present invention is directed to a computer application for updating an Intranet portal. The computer application includes computer instructions for executing the steps of proposing, by a user, a module to be updated in an Intranet portal, adding the proposed module to a list of suggested modules and displaying the list of suggested modules to a user of the Intranet portal. The computer application also includes computer instructions for executing the steps of selecting, by a user, a module from the list of suggested modules, indicating, by a user, support for the selected module to be updated and including the indication of support for the selected module in a cumulative indication of support for the selected module. Finally, the computer application permits an administrator to determine a module to be updated in the Intranet portal from the list of suggested modules by using the cumulative indication of support for each suggested module in the list of suggested modules.

One advantage of the present invention is that users can have meaningful input as to the types of modules that should be added to the intranet portal.

Another advantage of the present invention is that it can be used to assist in the formation of strategies and development schedules for the Intranet portal by illustrating the demand or lack of demand for particular types of modules.

Other features and advantages of the present invention will be apparent from the following more detailed description of the preferred embodiment, taken in conjunction with the accompanying drawings which illustrate, by way of example, the principles of the invention.

The present invention is described in greater detail below with reference to the following drawing:

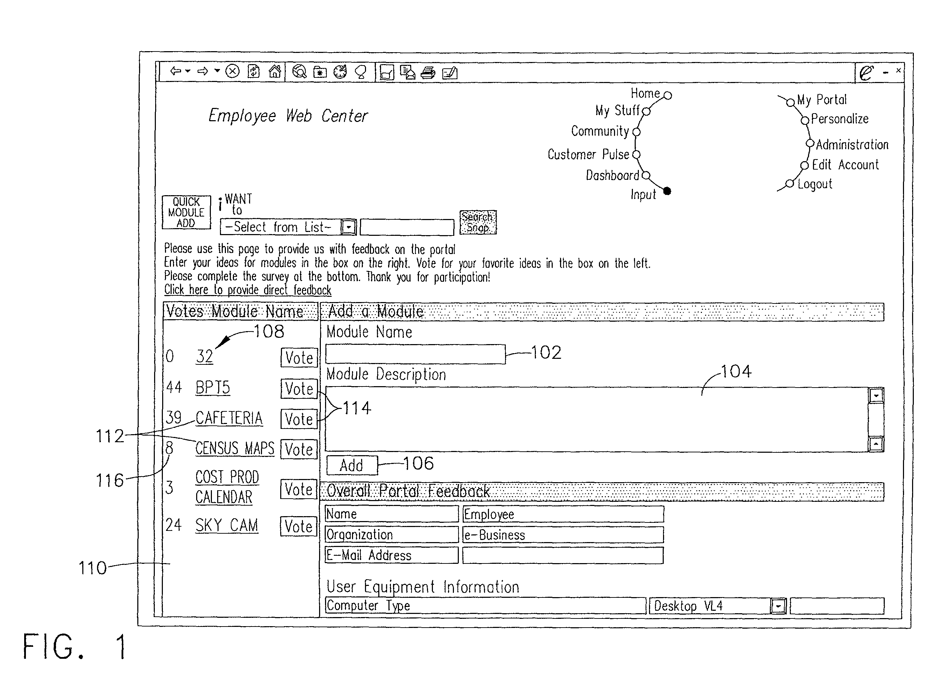

Figure 1 illustrates a web page on an Intranet for users to suggest and review modules.

Whenever possible, the same reference numbers will be used throughout the figures to refer to the same parts.

The present invention is directed to an application and process for updating a portal for a computer network by adding, changing or removing components used in the portal. The portal is preferably used with an Intranet, however the portal can also be used with any other type of computer network, for example, the Internet, a local area network (LAN), a wide area network (WAN) or Extranet. The Intranet or computer network preferably has a central or server computer that is used to store the application and portal. The Intranet or computer network also preferably has one or more remote or client computers that can access the application and portal stored on the server computer. The client computers and server computer can be any type of general purpose computer having memory devices (e.g. RAM, ROM, hard disk, CD-ROM, etc.), processing units (e.g. CPU, ALU, etc.) and input/output devices (e.g. monitor, keyboard, mouse, printer, etc.).

In another embodiment of the present invention, each of the client or remote computers are again linked together through an Intranet, however instead of accessing the application on the server computer, the client computers have loaded into their memory a complete copy of the application. The application is preferably a software application that is executed from the memory device of the client computer. The application can be loaded into the memory device of the client computer from a portable medium such as a CD-ROM, DVD-ROM, floppy disk, etc., that is inserted into the client computer. Alternatively, the application can be transferred or loaded directly into the memory device of the client computer through an electronic connection with another computer that has a stored copy of the application. In other words, the application can be downloaded to a client computer from another computer over the network. Finally, the application may be implemented as hardware and incorporated as part of either the client computer or the server computer.

As discussed above, the computer network is preferably an Intranet. To access data, applications, information and processes from the Intranet, the users of the Intranet can be provided with an Intranet portal. The Intranet portal operates to assist users in navigating and using the Intranet to access data, applications, information and processes from the Intranet. In a preferred embodiment of the present invention, the Intranet portal is constructed from modules or components. The modules are small pieces of functionality or applications preferably implemented with Java Server Page (JSP) or Servlet application programming interface (API) technology to supply or provide access to data, applications, information and processes to the user over the Intranet regardless of where the data, applications, information and processes are located relative to the Intranet.

The specific modules included in a user's Intranet portal may be selected by the user based on the user's particular needs and interests. However, the modules included in the Intranet portal may be selected by an administrative or managing entity to ensure that certain data, applications, information or processes are provided to all Intranet users. Regardless of the person or entity who selects the modules included in the users' Intranet portals, the modules included in or available for inclusion in the Intranet portal have to be reviewed and updated. Frequently, the updating process requires the addition of new modules to meet the requirements of the users of the Intranet portal. Any new modules to be added or made available in the Intranet portal to provide the users with access to additional data, applications, information or processes are usually created and developed under the supervision and guidance of the administrative or managing entity.

The process for updating an Intranet portal by adding new modules begins with a user suggesting or proposing a module for a particular type of data, application, information or process to be included in the Intranet portal. To suggest or propose a module, the user has to access the appropriate web page or location on the Intranet or computer network. The appropriate web page or location for suggesting or proposing a new module is preferably included in a feedback or input section of the Intranet portal. The input section can provide the user with the opportunity to comment and make suggestions relating to the operation of the Intranet portal and the user's satisfaction with the Intranet portal. However, the appropriate web page or location can also be a stand-alone web page that is dedicated only to the process of updating the Intranet portal.

Figure 1 illustrates a web page from a feedback section of an Intranet portal where a user can suggest or propose a new module for the Intranet portal. To propose or suggest a new module, the user has to enter a name or title for the module in module name field 102. The user also has to provide a description of the module the user is proposing in module description field 104. The description of the module in the module description field 104 should set out in detail the particular type of data, application, information or process, the user would like to have implemented into the module. For example, the user may want a web site with valuable technical data to be implemented in a module so that the web site can be accessed through the Intranet portal. Another example is a request for a useful application to be implemented in a module so that the application can be executed from the Intranet portal without having to separately execute the application. Once the user has provided a title and description of the module in fields 102 and 104, the user has to select the add button 106 to add the proposed module to a list of proposed modules 108.

In one embodiment of the present invention, before the user can add the proposed module to the list of proposed modules 108 the user may have to provide additional information. The additional information to be provided by the user can be related to the module. For example, the user may be required to designate a target destination in the Intranet portal for the proposed module or designate a target user group for the proposed module. The additional information to be provided by the user can also be related to the user proposing the module. For example, the user may have to provide a name and contact information or provide a reason why the module is needed or wanted. In another embodiment of the present invention, the user may be required to provide only a name and description of the proposed module and may optionally provide additional information before adding the proposed module to the list of proposed modules 108.

The list of proposed modules 108 is preferably displayed in a window, frame or panel 110. The window or panel 110 may or may not be included on the same web page as the module name field 102 and the module description field 104 as shown in Figure 1. Other users of the Intranet portal can then view the proposed modules in the list of proposed modules 108 by accessing the window or panel 110. Each individual proposed module 112 in the list of proposed module has a link that permits the other users to review the module description of the proposed module. The module description is preferably displayed to the other users in a pop-up box or window or on a separate web page. However, any technique can be used that can display the module description of a proposed module when requested by another user.

After reviewing the module description of the proposed module 112, the user can indicate his interest, support, need and/or approval of the proposed module 112 by selecting or voting for the module. The user votes or selects a proposed module by selecting the vote button 114 that corresponds to the proposed module 112. The selection of the vote button 114 by a user is then indicated as part of a running total for the proposed module 112 in a vote tally or total 116 associated with the proposed module 112. Each user is permitted to vote only once for a proposed module 112 and is then prevented from voting for the proposed module 112 a second time.

The administrative or managing entity can then review the vote totals 116 for each proposed module 112 to determine those proposed modules 112 that are of most interest to the users of the Intranet portal. The administrative entity then preferably arranges for the development of the proposed modules 112 that have the largest vote totals 116 before the development of proposed modules 112 with smaller vote totals 116. After the proposed modules 112 are created and developed, the proposed modules 112 can be added to the Intranet portal and selected by users or the administrative entity for inclusion in the user's Intranet portal. The administrative entity then reviews the vote totals 116 and again selects the proposed module 112 with the most votes. In another embodiment of the present invention, a minimum number of votes threshold requirement may be implemented, thereby requiring a proposed module 112 to have a certain number of votes before the administrative entity authorizes the development of the proposed module 112.

In one embodiment of the present invention, the user reviewing the module description of the proposed module 112 can add his comments to the module description. The added comments to the module description can enhance the description of the module, provide personal insights of the reviewing user on the module or criticize the proposed module 112. The added comments can then be stored in conjunction with the module description for the proposed module 112 and subsequently accessed and reviewed by other users considering voting for a proposed module 112. In addition, the users may be given the option to vote for added comments relating to a proposed module 112, thereby providing the administrative entity with additional information on the modules to be added to the Intranet portal.

In another embodiment of the present invention, the users can have the option to vote against a proposed module 112, in addition to voting for a proposed module by activating vote button 114. The number of negative votes can be totaled and presented to the user as being associated with a particular proposed module 112 similar to that described above for presenting the number of positive votes. Furthermore, the user can be limited to a single vote, either for or against the proposed module 112. This embodiment can be used by the administrative entity to determine those proposed modules 112 that are controversial among the users. The administrative entity is able to make a more accurate determination of the overall user demand for a proposed module 112 by looking at both positive and negative opinions of the proposed module 112. A proposed module 112 with a large amount of positive votes and few negative votes is probably more in demand than a proposed module 112 with a large amount of both positive and negative votes.

In still another embodiment of the present invention, the users can provide a rating or evaluation of each proposed module 112. The rating can be selected from a range of possible choices such as a rating of 1-5 or strongly agree - strongly disagree. The number of users providing ratings can be totaled and an average rating for the proposed module can be generated. The administrative entity can then use the average rating and number of users to determine the proposed modules 112 that should be developed. The administrative entity can determine the proposed modules 112 to develop by selecting those proposed modules 112 having a high average rating from a large number of users.

In a further embodiment of the present invention, users of the Intranet portal can propose the revision or removal of already developed and existing modules. Instead of providing a description of the functionality of the new module, the user can provide the reasons for wanting a module removed or the things that can be changed on an existing module, for example, correcting problems areas of a module or adding new or additional functionality to a module. Other users can then review the reasons of the proposing user and indicated their support for the revision or removal of a module. The administrative entity can then review this information to obtain a better understanding of the users opinions on the Intranet portal and modules.

The present invention has been described above in terms of adding modules to an Intranet portal. However, the present invention can be used for any type of employee or user suggestions to improve or benefit a company or organization that can be entered and disseminated over a network. By using the present invention the management of a company or organization can quickly and easily make a determination as to those suggestions that are supported by the employees and respond accordingly. For example, the present invention can be used to rank employee support on suggestions relating to benefits, vendors, equipment and supplies, service providers, management procedures or any other types of suggestions or recommendations.

## Claims

1. A method for determining a module to be added to an Intranet portal, the method comprising the steps of:
proposing, by a user, a module to be added to an Intranet portal;
adding the proposed module to a list of suggested modules (108);
displaying the list of suggested modules (108) to a user of the Intranet portal;
selecting, by a user, a module (112) from the list of suggested modules (108);
indicating, by a user, support for the selected module;
including the indication of support for the selected module in a cumulative indication of support (116) for the selected module; and
determining, by an administrator, a module to be added to the Intranet portal from the list of suggested modules (108) using the cumulative indication of support (116) for each suggested module (112) in the list of suggested modules (108).

2. The method of claim 1 wherein the step of proposing a module further comprises the steps of:
providing a name (102) for the proposed module; and
providing a description (104) for the proposed module.

3. The method of claim 2 further comprising the step of reviewing, by a user, the description (104) of the selected module, the step of reviewing the description (104) of the selected module comprises the step of opening a separate window that includes the description (104) of the selected module.

4. The method of claim 1 further comprises:
the step of indicating support further comprises the step of selecting, by a user, a button (114) associated with the selected module;
the indication of support for the selected module is a vote for the selected module;
the cumulative indication of support (116) for the selected module is a sum of all the votes for the selected module; and
displaying the sum of all votes for the selected module.

5. A computer program product embodied on a computer readable medium and executable by a computer for updating an Intranet portal, the computer program product comprising computer instructions for executing the steps of:
proposing, by a user, a module to be updated in an Intranet portal;
adding the proposed module to a list of suggested modules (108);
displaying the list of suggested modules (108) to a user of the Intranet portal;
selecting, by a user, a module (112) from the list of suggested modules (108);
indicating, by a user, support for the selected module to be updated;
including the indication of support for the selected module in a cumulative indication of support (116) for the selected module; and
determining, by an administrator, a module to be updated in the Intranet portal from the list of suggested modules (108) using the cumulative indication of support (116) for each suggested module (112) in the list of suggested modules (108).

6. The computer program product of claim 5 wherein the step of proposing a module further comprises the steps of:
identifying the proposed module; and
providing a description (104) of an update for the proposed module, the update for the proposed module is one of adding the proposed module, changing the proposed module and removing the proposed module.

7. The computer program product of claim 6 further comprising computer instructions for executing the steps of:
reviewing, by a user, the description (104) of the update for the selected module, the step of reviewing the description (104) of the update for the selected module comprises the step of opening a separate window that includes the description (104) of the selected module; and
supplementing, by a user, the description (104) of the update for the selected module with additional comments, the additional comments being added to the description (104) of the update for the selected module for review by subsequent users.

8. The computer program product of claim 6 wherein the indication of support for the selected module is a rating of the update for the selected module and the cumulative indication of support (116) for the selected module is an average of all the ratings for the selected module.

9. The computer program product of claim 5 wherein:
the step of indicating support further comprises the step of selecting, by a user, a button (114) associated with the selected module;
the indication of support for the selected module is a vote for the selected module;
the cumulative indication of support (116) for the selected module is a sum of all the votes for the selected module.

10. The computer program product of claim 9 further comprising computer instructions for executing the step of displaying the sum of all votes (116) for the selected module.
